# FASCICULE DE BREVET EUROPEEN

(11) **EP 0 574 339 B1**
(45) Date de publication et mention de la délivrance du brevet: **17.09.1997**
(21) Numéro de dépôt: 93420236.7
(22) Date de dépôt: 09.06.1993
(51) Int. Cl.: H02P 8/00, H02P 6/00

(54) **Système de commande de moteur synchrone à rotor aimanté**
Steuersystem für Synchronmotor mit Dauermagnetläufer
Control system for synchronous motor with magnetized rotor

(30) Priorité: 12.06.1992 FR 9207597
(43) Date de publication de la demande: 15.12.1993
(73) Titulaire: CROUZET Automatismes, 26000 Valence (FR)
(72) Inventeur: Hilaire, Jean-François, F-26000 Valence (FR); Guinet, Michel, F-07500 Granges Les Valence (FR)
(74) Mandataire: de Beaumont, Michel

(56) Documents cités:
- EP-A- 0 310 858
- EP-A- 0 433 219
- FR-A- 2 600 467

## Description

La présente invention concerne un moteur synchrone à rotor aimanté, tel qu'un moteur de type pas à pas, et un système de commande sans capteurs d'un tel moteur. Un tel système de commande exploite les forces contre-électromotrices naissant dans les bobines du moteur afin d'obtenir des informations indiquant sensiblement la position du moteur.

La plupart des systèmes de commande sans capteurs sont utilisés avec des moteurs triphasés qui sont des moteurs bipolaires, c'est-à-dire dont les bobines sont parcourues par des courants dans les deux sens.

La demande de brevet Européen 0 433 219 décrit un système de commande à détection de force contre électromotrice appliqué à un moteur de type pas à pas bipolaire pour assurer une auto-commutation du moteur. Les moteurs de type pas à pas sont biphasés. De façon générale, une auto-commutation d'un moteur consiste à fournir un nouvel ordre de rotation au moteur (imposer un nouveau pas) dès que l'on détecte que l'ordre (le pas) précédent a été réalisé.

Un inconvénient de l'utilisation d'un moteur bipolaire, comme cela apparaît dans la demande 0 433 219, est qu'il nécessite deux inverseurs de courant (ou quatre interrupteurs) par bobine, ce qui rend le circuit de commande complexe et coûteux (8 interrupteurs dans la demande 0 433 219).

Un autre inconvénient du système de la demande 0433219 est que le branchement des bobines du moteur est particulier et nécessite l'utilisation d'un moteur à 8 fils d'alimentation. Les moteurs à 8 fils sont d'une utilisation peu courante et sont par conséquent peu disponibles en standard.

Encore un autre inconvénient du système de la demande 0 433 219 est que, lors des phases de récupération pendant lesquelles les courants dans les bobines s'inversent (à chaque commutation de pas), les tensions mesurées par le système sont difficilement exploitables et peuvent provoquer des réactions peu prévisibles du système.

La commande d'un moteur synchrone unipolaire (moteur dont les bobines sont parcourues par des courants dans un seul sens) ne nécessite qu'un interrupteur par bobine. Il existe des systèmes de commande sans capteurs de moteurs unipolaires, mais ils sont basés, comme pour les moteurs triphasés, sur une alimentation discontinue des bobines et ne permettent donc pas d'exploiter pleinement les performances (couple, rendement) du moteur.

Un moteur synchrone à rotor aimanté et à stator muni de deux couples de bobines ayant sensiblement la même impédance, est décrit dans la demande de brevet français 2 600 467. Ce moteur comprend un point commun flottant auquel sont reliées des premières bornes des bobines, la deuxième borne de chaque première bobine d'un couple étant reliée à une première borne d'alimentation par l'intermédiaire d'un premier interrupteur respectif et la deuxième borne de chaque deuxième bobine d'un couple étant reliée à une deuxième borne d'alimentation par l'intermédiaire d'un deuxième interrupteur respectif.

Le système de commande de ce moteur est prévu pour commander les interrupteurs de manière à effectuer une séquence de combinaisons de fermeture simultanée d'un premier interrupteur respectif et d'un deuxième interrupteur respectif, le passage d'une combinaison de fermeture à une autre étant prévu pour entraîner une rotation du rotor d'un angle prédéterminé.

Un objet de la présente invention est de relever une information de forces contre-électromotrices sans perturbation dans un moteur unipolaire standard couramment utilisé.

Un objet de la présente invention est également de prévoir un système particulièrement simple de commande en mode autocommuté ou en mode pas à pas d'un moteur synchrone.

Un autre objet de la présente invention est de prévoir un tel système permettant de fonctionner correctement lors des phases de récupération.

Un autre objet de la présente invention est de prévoir, dans un tel système appliqué à un moteur de type pas à pas unipolaire, une détection de la réalisation effective des pas imposés au moteur.

Un autre objet de la présente invention est de prévoir un tel système permettant de détecter un court-circuit ou une rupture de bobine ou d'interrupteur ou une connexion accidentelle d'une borne de bobine à une borne d'alimentation.

Selon l'invention, ces objets sont atteints par le système de commande selon la revendication 1.

Selon un mode de réalisation de la présente invention, le circuit de détection est prévu pour détecter le fait que la tension moyenne du point milieu devient proche de l'une ou l'autre des tensions présentes sur lesdites bornes d'alimentation.

Selon un mode de réalisation de la présente invention, le circuit de détection est prévu pour comparer, dans un intervalle de temps prédéterminé entre deux commutations de pas, le signe de la composante alternative de la tension du point milieu à un signe déterminé par la parité de la commutation de pas.

Selon un mode de réalisation de la présente invention, le circuit de détection est connecté au circuit de commande pour commuter un pas à chaque passage de la tension du point milieu flottant par une valeur prédéterminée.

Selon un mode de réalisation de la présente invention, le circuit de détection comprend un comparateur à fenêtre.

Selon un mode de réalisation de la présente invention, les premières bobines et les deuxièmes bobines sont respectivement couplées magnétiquement.

Selon un mode de réalisation de la présente invention, chaque interrupteur est muni d'une diode de récupération et le circuit de commande comprend des moyens pour détecter l'inversion de la tension aux bornes d'un interrupteur et pour ouvrir au moins l'interrupteur adjacent.

Selon un mode de réalisation de la présente invention, le point de connexion entre un interrupteur et une bobine est relié à la borne de commande de l'interrupteur adjacent par l'intermédiaire d'une diode montée dans le sens bloquant en fonctionnement normal.

Ces objets, caractéristiques et avantages ainsi que d'autres de la présente invention seront exposés en détail dans la description suivante de modes de réalisation particuliers faite en relation avec les figures jointes parmi lesquelles :
la figure 1 représente schématiquement la structure et la connexion des bobines d'un moteur synchrone unipolaire à rotor aimanté classique ;
la figure 2 illustre l'allure de signaux classiques de commande des bobines pour faire tourner le moteur dans un sens ou dans l'autre ;
la figure 3 représente une connexion des bobines d'un moteur synchrone unipolaire utilisé dans la presente invention ;
la figure 4 représente les allures de signaux de commande des bobines et de la tension en un noeud de la disposition de la figure 3 ;
la figure 5 représente un exemple de circuit de détection de pas manqués selon un mode de réalisation de la présente invention ;
la figure 6 illustre les allures de signaux apparaissant en divers noeuds du circuit de la figure 5 ;
la figure 7 représente une architecture d'un système d'auto-commutation d'un moteur selon un mode de réalisation de la présente invention ;
les figures 8A et 8B illustrent des courants dans les bobines du moteur lors d'une commutation d'un pas au suivant ; et
la figure 9 représente un mode de réalisation de dispositif permettant de pallier un inconvénient lié à la circulation dans les bobines du moteur de courants de récupération.

Avant de décrire la présente invention, on va décrire un moteur synchrone unipolaire à rotor aimanté classique ainsi qu'une connexion classique de ses bobines.

### Moteur synchrone unipolaire classique

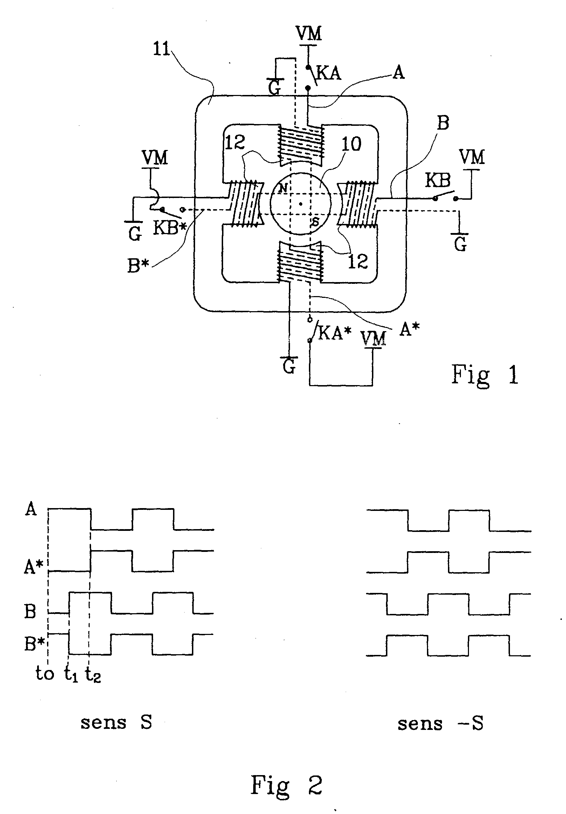

La figure 1 représente schématiquement la structure d'un moteur synchrone unipolaire à rotor aimanté. Le moteur comprend un rotor aimanté 10 présentant une face nord N et une face sud S. Une carcasse magnétique ou stator 11 entoure le rotor 10 et comprend des éléments, appelés "dents" ou "plots" 12, disposés à 90° et s'étendant vers le rotor. Deux bobines A (en trait plein) et A* (en pointillés) sont enroulées dans le même sens autour de deux dents 12 opposées. Par conséquent, ces bobines A et A* sont fortement couplées magnétiquement entre elles. Deux autres bobines B (en trait plein) et B* (en pointillés) sont enroulées de la même manière autour des deux dents opposées restantes.

Au niveau de chaque dent, on dispose de deux fils reliés chacun à l'une des deux bobines enroulées autour de la dent. Un premier fil est relié à un potentiel fixe, tel que la masse G, et le deuxième fil est relié à une tension d'alimentation VM par l'intermédiaire d'un interrupteur respectif KA, KB, KA* et KB*. Ainsi, les bobines sont reliées en étoile à la masse.

De façon classique, un tel moteur dispose de 6 fils d'alimentation. Quatre fils correspondent à ceux qui sont reliés aux interrupteurs. Des cinquième et sixième fils d'alimentation sont respectivement reliés aux bornes reliées à la masse des bobines A et A*, et aux bornes reliées à la masse des bobines B et B*.

La référence désignant un signal de commande d'un interrupteur K est confondue ci-après avec la référence désignant la bobine associée.

La figure 2 représente les allures des signaux de commande A, B, A*, B* respectivement pour un sens de rotation S du rotor et un sens opposé -S.

Les signaux A, A* et B, B* sont en opposition de phase respectivement. Pour la rotation dans le sens S, le signal A est par exemple en retard de phase de 90° par rapport au signal B et, pour le sens -S, le signal A est en avance de phase de 90°. De tels signaux de commande sont les plus fréquemment utilisés car on préfère alimenter toujours deux bobines à la fois. Le fonctionnement du moteur est alors le suivant, de manière très simplifiée.

A un instant t₀, les bobines A et B* sont alimentées. Le rotor 10 rejoint, par exemple, la position de la figure 1. A un instant t₁, on effectue une commutation de rotation et ce sont les bobines A et B qui sont alimentées. Le rotor 10 tourne alors de 90° dans le sens S. A un instant t₂, une nouvelle rotation est commutée et ce sont les bobines A* et B qui sont alimentées ; le rotor 10 tourne de nouveau de 90° dans le sens S...

Un moteur de type pas à pas unipolaire est un moteur synchrone présentant la même structure à quatre bobines que le moteur de la figure 1, sauf qu'il comprend un rotor à grand nombre de paires de pôles N et S. Lorsqu'on commande une rotation du moteur de type pas à pas, celui-ci tourne d'un pas au lieu de tourner de 90°. Etant donné cette similarité entre les moteurs de type pas à pas et les moteurs synchrones, on ne parlera ci-après que des moteurs de type pas à pas en sachant que tout ce qui est dit pour eux s'applique également aux moteurs synchrones.

### Moteur unipolaire compris dans le système selon l'invention

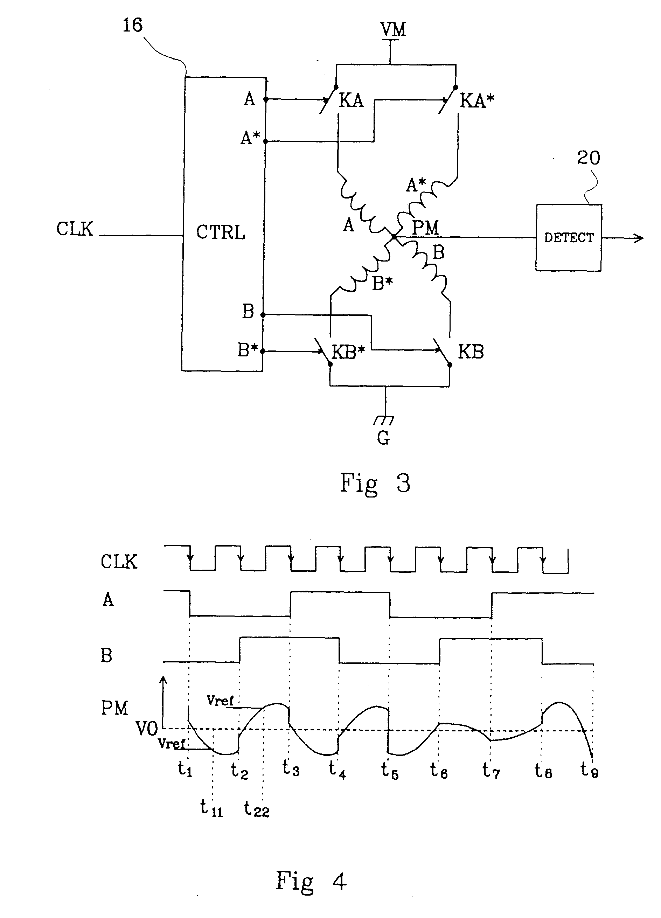

La figure 3 représente schématiquement une connexion des bobines d'un moteur de type pas à pas ou synchrone unipolaire. Dans cette figure, on retrouve des mêmes éléments qu'à la figure 1 désignés par des mêmes références. Les bobines A, B, A* et B* sont reliées en croix à un point milieu PM flottant (et non à un potentiel fixe, tel que dans la disposition de la figure 1).

Les interrupteurs KB et KB* de commande des bobines B et B* sont reliés à un potentiel fixe, tel que la masse G et les interrupteurs KA et KA* de commande des bobines A et A* sont reliés à un potentiel d'alimentation VM.

Ce moteur est connu du document FR-A-2600467.

Un avantage de cette connexion est qu'elle néoessite des bobines supportant seulement la moitié de la tension d'alimentation VM alors qu'elles devaient supporter la tension VM dans la connexion de la figure 1. Il en résulte que les bobines comprennent moins de spires et sont donc moins coûteuses à enrouler.

Un autre avantage de cette connexion est que l'on évite un court-circuit franc sur les bornes d'alimentation si l'une des bobines A et A* ou B et B* est accidentellement court-circuitée.

On remarquera que les fils de connexion utilisés selon cette configuration sont les mêmes que ceux de la configuration classique de la figure 1 (moteur à 6 fils). Ainsi, il n'est pas nécessaire, pour commander des moteurs de ce type, de prévoir des fils de connexion supplémentaires dans un moteur classique prévu pour être branché selon la figure 1. En outre, si l'on ne prévoit pas d'exploiter la tension apparaissant au point PM, il ne faut que quatre fils pour alimenter le moteur.

Un autre avantage constaté par la demanderesse de la connexion est qu'il apparaît au point milieu PM une tension dont les variations sont représentatives des forces contre-électromotrices apparaissant dans les bobines. Selon l'invention cette tension peut être exploitée de différentes manières, comme on le verra ultérieurement par un circuit détecteur, pour assurer une fonction de diagnostic et/ou de commande.

Un autre avantage est que, lorsqu'il se présente une défaillance telle qu'un court-circuit ou une rupture de bobine ou d'interrupteur, ou une connexion accidentelle d'une borne de bobine à une borne d'alimentation, la tension du point PM est déséquilibrée de façon importante et peut être utilisée pour détecter cette défaillance.

Les signaux de commande A, B, A* et B* à fournir aux interrupteurs K sont identiques aux signaux classiques de la figure 2. Ces signaux sont fournis par un circuit de commande 16 (CTRL) recevant un signal d'horloge CLK déterminant la fréquence de commutation des pas du moteur.

La figure 4 représente l'allure des signaux de commande A et B (des signaux A* et B* étant respectivement les complémentaires des signaux A et B) et du signal d'horloge CLK pour commuter plusieurs pas. On a également représenté l'allure correspondante de la tension apparaissant au point milieu PM.

A des instants t₁ à t₉, on commute des pas successifs du moteur lors des fronts descendants du signal CLK. La tension PM oscille autour d'une valeur moyenne V0 = VM/2 si les caractéristiques des bobines du moteur sont identiques. On constate que la tension PM présente, entre deux instants de commutation, une allure proche d'une fraction d'alternance sinusoïdale, cette fraction d'alternance subissant un changement de signe par rapport à la valeur V0 d'un pas au suivant. Ci-après, on se réfèrera plutôt à la tension PM-V0 qui représente la composante alternative de la tension PM.

### Détection de pas manqués dans un moteur de type pas à pas

A partir de l'instant t₅, il se produit une anomalie que l'on peut détecter grâce à la tension PM (ou PM-V0). A l'instant t₅ le couple résistant du moteur devient suffisamment important pour que le moteur ne puisse pas tourner du pas imposé par les signaux de commande. La fraction d'alternance entre les instants t₅ et t₆ subit un déphasage se reproduisant également dans les intervalles t₆-t₇, t₇-t₈ et t₈-t₉ avec en outre des variations aléatoires d'amplitude.

Lors du fonctionnement normal (entre les instants t₁ et t₅), la tension PM-V0 est négative à chaque fin de fraction d'alternance, par exemple, impaire (t₁-t₂, t₃-t₄) et positive à chaque fin de fraction d'alternance paire (t₂-t₃, t₄-t₅). A partir de l'instant t₅, le signe de la tension PM-V0 s'inverse par rapport aux conditions précédentes, c'est-à-dire que la tension PM-V0 devient positive à chaque fin de fraction d'alternance impaire et négative à chaque fin de fraction d'alternance paire.

Ainsi, en détectant le signe de la tension PM-V0 à la fin (ou au début) d'une fraction d'alternance de parité donnée, on peut indiquer qu'un pas imposé vient d'être manqué.

Une indication de pas manqué peut simplement être utilisée pour signaler une erreur et, par exemple, arrêter le moteur. Mais cette indication peut être utilisée pour fournir la position du moteur qui est obtenue en soustrayant au nombre de pas imposés le nombre de pas manqués.

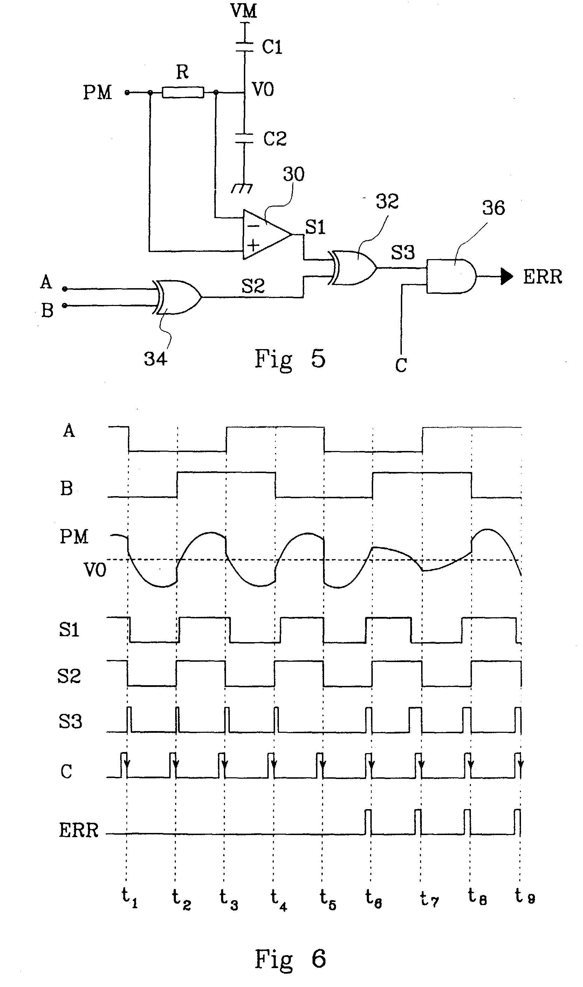

La figure 5 représente un mode de réalisation du circuit détecteur 20 permettant de fournir un signal d'erreur ERR présentant une impulsion pour chaque pas manqué. Ce circuit utilise la tension PM ainsi que les signaux A et B de commande des interrupteurs KA et KB et un signal C de cadencement des commutations de pas.

La tension PM est appliquée sur une borne d'une résistance R dont l'autre borne est reliée au point de connexion entre deux capacités C1 et C2 reliées en série entre la tension VM et la masse. Le signe de la composante alternative du signal PM apparaissant ainsi aux bornes de la résistanoe R est détecté par un comparateur 30. Le signal de sortie S1 du comparateur 30 est appliqué à une entrée d'une porte OU exclusif 32. Une autre entrée de la porte OU exclusif 32 reçoit le signal de sortie S2 d'une porte OU exclusif 34 recevant sur deux entrées respectivement les signaux A et B. Le signal de sortie S3 de la porte 32 est fourni à une entrée d'une porte ET 36 dont une autre entrée reçoit le signal de cadencement C.

Le signal de cadencement C est sous la forme d'impulsions positives de largeur inférieure à la demi-période du signal C. Les fronts descendants (marqués par des flèches) du signal C coïncident avec les commutations de pas. Un tel signal C peut être obtenu à partir d'un signal d'horloge rectangulaire (CLK) par l'intermédiaire d'une bascule monostable et au plus deux inverseurs.

La figure 6 représente les allures des signaux S1, S2, S3, C et ERR dans la situation de la figure 4. Les signaux de la figure 4 ont été reportés dans la figure 6.

Avec la configuration de la figure 5, le signal S1 est à 1 lorsque la tension PM dépasse la valeur V0 et à 0 dans le cas contraire. Le signal S2 oscille entre 0 et 1 à chaque commutation de pas. Le signal S3 est à 1 à chaque fois que les signaux S1 et S2 présentent des valeurs différentes. Ceci se produit lorsque les fractions d'alternance sont au-dessus de la valeur V0 lors des pas impairs et en dessous de la valeur V0 lors des pas pairs, à savoir, juste après chacun des instants t₁ à t₄ et juste avant chacun des instants t₆ à t₉. Ainsi, aux instants t₁ à t₅, les impulsions S3 et C ne se recouvrent pas et la sortie ERR de la porte ET 36 reste à 0. Aux instants t₆ à t₉, par contre, les impulsions S3 et C se recouvrent et le signal ERR fournit alors simultanément des impulsions indiquant chacune qu'un pas a été manqué.

Si le moteur présente deux sens de rotation déterminés par un signal de sens, on prévoit dans le circuit de la figure 5 une porte OU exclusif supplémentaire entre les portes 32 et 34 et dont une entrée reçoit le signal de sens.

### Auto-commutation d'un moteur de type pas à pas ou synchrone

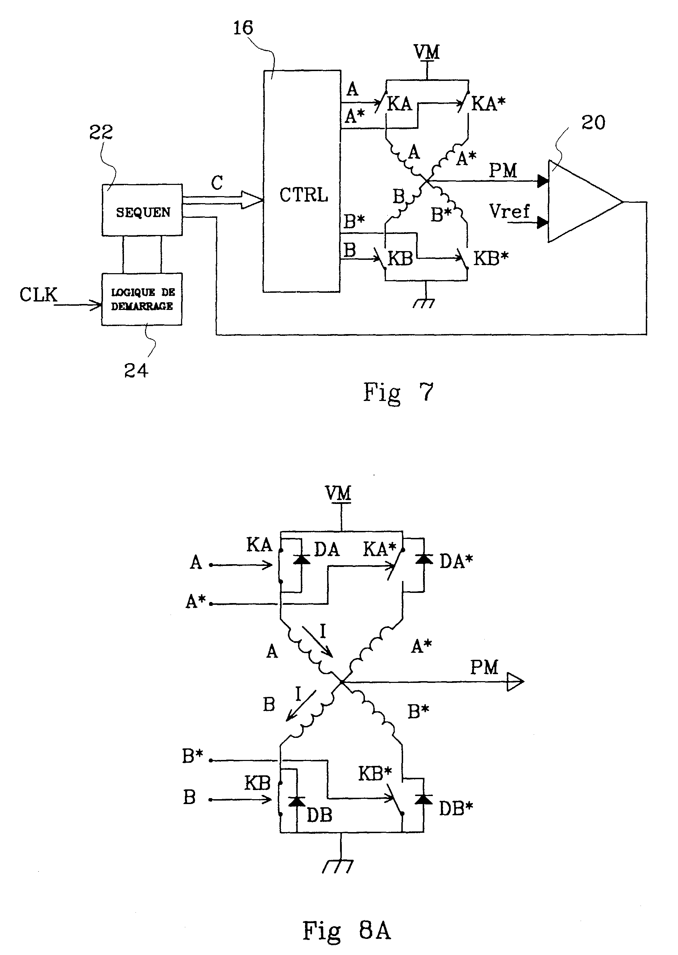

La figure 7 représente schématiquement un mode de réalisation d'architecture d'un système selon l'invention pour l'auto-commutation d'un moteur. On y retrouve des mêmes éléments qu'à la figure 3, désignés par des mêmes références. Le circuit détecteur 20 est ici un comparateur (qui peut être à fenêtre) comparant la tension PM-V0 du point milieu flottant à une tension de référence Vref éventuellement nulle. Le signal de sortie du comparateur 20 est exploité par un séquenceur 22 fournissant un signal de cadencement de pas C, en lieu et place du signal d'horloge CLK, au circuit de commande 16 des interrupteurs K.

On supposera dans un premier temps que le moteur tourne à un régime établi. En se référant à la figure 4, on provoque, à l'instant t1, une commutation de pas du moteur (lors d'une première impulsion C). A un instant t11, le comparateur 20 détecte que la tension PM-V0 atteint la tension Vref. Le séquenceur 22 attend alors pendant un intervalle de temps adéquat (t₁₁-t₂, éventuellement nul) avant de fournir une impulsion C de commutation du pas suivant à l'instant t₂. A un instant t₂₂, la tension PM-V0 atteint de nouveau la valeur Vref, et ainsi de suite.

Si, selon un mode de réalisation, la tension Vref est choisie nulle, le comparateur 20 détecte les passages par zéro de la tension PM-V0. Dans ce cas, il faut ignorer d'éventuels phénomènes transitoires se produisant juste après la commutation des pas, par exemple à l'aide d'un filtre passe-bas connecté entre le point PM et le comparateur 20 ou en prenant en compte tardivement le signal de sortie du comparateur.

Lorsque le moteur tourne à une vitesse plus faible que prévue, par exemple lors d'un démarrage, la force contre-électromotrice est trop faible pour être exploitable. Il est alors nécessaire de prévoir une logique de démarrage 24 pilotée par un signal d'horloge CLK et qui provoque, par l'intermédiaire du séquenceur 22, un fonctionnement en mode pas à pas du moteur tant que le moteur ne tourne pas suffisamment vite. Le signal CLK pourra être un signal de fréquence croissante (rampe d'accélération) générée de façon interne à la logique de démarrage 24.

### Autres modes de réalisation de la présente invention

On peut facilement détecter, grâce à un autre comparateur à fenêtre, si la tension PM devient proche de la tension VM (par exemple 2/3 de VM) ou de zéro (1/3 de VM) pour indiquer qu'une bobine est court-circuitée ou rompue, ou bien qu'un interrupteur reste ouvert ou fermé de façon durable, ou encore qu'une connexion accidentelle a eu lieu entre, par exemple, une des bornes d'alimentation et un des fils du moteur.

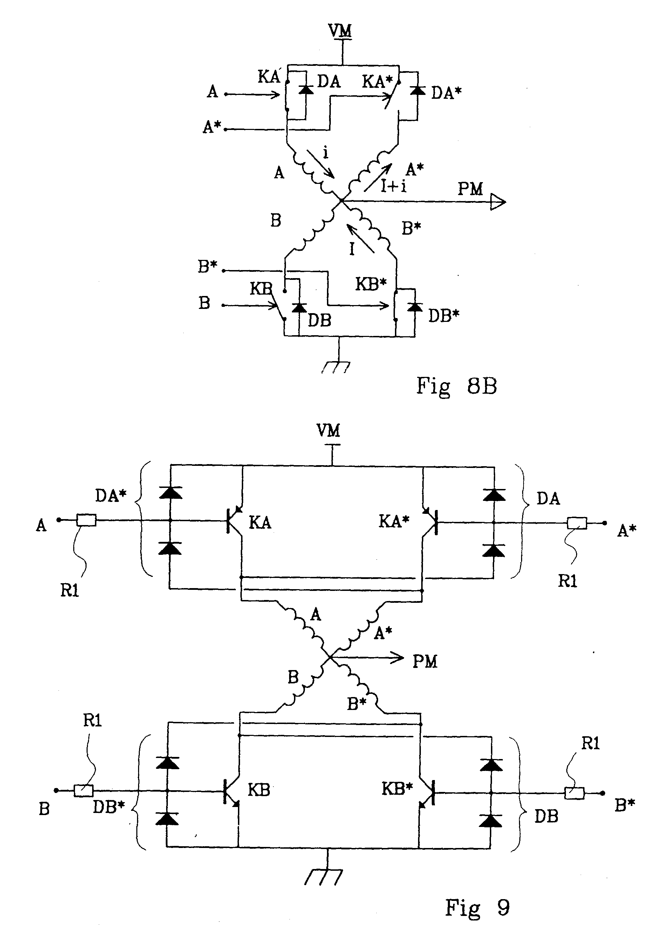

Jusqu'ici, on a considéré que les bobines du moteur pas à pas ne présentaient aucune énergie stockée d'un pas à l'autre. Les figures 8A et 8B représentent ce qui se produit réellement lors de la commutation d'un pas au suivant. Dans ces figures, à chacun des interrupteurs KA, KB, KA* et KB* est associée une diode de récupération DA, DB, DA*, DB* montée en parallèle sur l'interrupteur dans le sens bloquant.

La figure 8A représente l'état des interrupteurs à la commutation d'un premier pas. Les interrupteurs KA et KB, par exemple, sont fermés et les interrupteurs KA* et KB* sont ouverts. Il s'établit un courant I dans les bobines A et B passant par les interrupteurs KA et KB.

La figure 8B représente l'état des interrupteurs à la commutation du pas suivant. L'interrupteur KA reste fermé, l'interrupteur KB a été ouvert et l'interrupteur KB* a été fermé. Juste après la commutation, le courant I accumulé dans la bobine B ne peut plus circuler par l'interrupteur KB et se retrouve circulant en sens inverse dans la bobine B* grâce au couplage magnétique entre les bobines B et B*. De même, le courant I accumulé dans la bobine A se retrouve en sens inverse dans la bobine A* grâce au couplage entre les bobines A et A*. Il circule donc un courant I entre la masse, l'interrupteur KB* ou la diode DB*, les bobines B* et A*, et la diode DA*. Le courant I se met à décroître plus ou moins rapidement selon la valeur de la tension VM et des différentes chutes de tension aux bornes des diodes et des interrupteurs traversés.

En même temps, l'interrupteur KA étant toujours fermé, il apparaît un courant i qui se met à circuler à travers les bobines A et A*.

Ainsi, lors d'une phase de récupération juste après une commutation des interrupteurs, la disposition en croix (comme, d'ailleurs, la disposition de la demande 0 433 219 précédemment citée) ne fonctionne plus de façon équilibrée et la tension au point milieu PM varie de manière difficilement exploitable.

Un aspect de la présente invention est de remédier à la variation inexploitable de la tension au point PM lors d'une phase de récupération. La solution consiste, par exemple dans le cas de la figure 8B, à ouvrir au moins l'interrupteur KA tant que la tension aux bornes de l'interrupteur KA* est négative.

En effet, lors de la phase de récupération représentée en figure 8B, un courant se met à circuler dans la diode DA* qui est montée dans le sens bloquant normalement. Par conséquent la tension aux bornes de cette diode (et de l'interrupteur associé KA*) s'inverse.

La figure 9 représente un exemple de mode de réalisation de circuit permettant d'ouvrir un interrupteur adéquat lors de la circulation de courants de récupération. Les interrupteurs KA et KA* sont des transistors PNP à émetteur relié à la tension d'alimentation VM. Les interrupteurs KB et KB* sont des transistors NPN à émetteur relié à la masse. Chacune des diodes de récupération D est en fait constituée d'une paire de diodes disposées en série dans le même sens de conduction. Le point de connexion entre les diodes d'une paire (par exemple DA*) associée à un premier transistor (KA*) est relié à la base du transistor adjacent (KA), c'est-à-dire de l'autre transistor relié au même potentiel d'alimentation (VM) que le premier transistor.

Ainsi, si l'on se place dans le cas de la figure 8B, le courant de récupération I+i traverse la paire de diodes DA*. La tension de seuil apparaissant aux bornes de la diode disposée en parallèle sur la jonction base-émetteur du transistor KA, polarise cette jonction en inverse, ce qui provoque le blocage du transistor KA.

Des résistances R1 sont disposées en série entre les bases des transistors K et les bornes de commande A, B, A* et B* des transistors pour que les transistors puissent être bloqués malgré la présence de signaux de commande.

Une variante du circuit de la figure 9 consiste, comme dans les figures 8A et 8B, à prévoir pour chaque transistor une seule diode de récupération, le collecteur d'un transistor étant relié à la base du transistor adjacent par l'intermédiaire d'une autre diode, montée dans le sens bloquant en dehors des phases de récupération. Ainsi, lors d'une phase de récupération, si la diode de récupération d'un transistor devient passante, la tension base-émetteur du transistor adjacent devient sensiblement nulle en bloquant le transistor. Cette variante s'applique notamment à des transistors MOS qui présentent de façon intrinsèque une diode "de récupération" entre drain et source.

Une autre variante du circuit de la figure 9 consiste à prévoir des comparateurs aux bornes de deux interrupteurs adjacents, qui provoquent le blocage de tous les interrupteurs lorsque la tension aux bornes d'un interrupteur s'inverse.

La présente invention est susceptible de nombreuses variantes et modifications qui apparaîtront à l'homme de l'art notamment en ce qui concerne la réalisation du circuit détecteur 20 et de la logique de commande d'ouverture des interrupteurs lors des phases de récupération.

## Revendications

1. Système de commande d'un moteur synchrone unipolaire à rotor aimanté et à stator muni de deux couples de bobines (A,B ; A*,B*), comprenant:
- un point commun flottant (PM) auquel sont reliées des premières bornes des bobines, la deuxième borne de chaque première bobine (A, A*) d'un couple étant reliée à une première borne d'alimentation (VM) par l'intermédiaire d'un premier interrupteur respectif (KA, KA*) et la deuxième borne de chaque deuxième bobine (B, B*) d'un couple étant reliée à une deuxième borne d'alimentation (G) par l'intermédiaire d'un deuxième interrupteur respectif (KB, KB*) ;
- un circuit de commande (16) prévu pour commander les interrupteurs de manière à effectuer une séquence de combinaisons de fermeture simultanée d'un premier interrupteur respectif et d'un deuxième interrupteur respectif, le passage d'une combinaison de fermeture à une autre étant prévu pour entraîner une rotation du rotor d'un angle prédéterminé ;
caractérisé en ce qu'il comprend au moins un circuit de détection (20) exploitant les variations de la tension apparaissant au point commun flottant (PM) pour détecter au moins une condition de fonctionnement du moteur.

2. Système selon la revendication 1, caractérisé en ce que le circuit de détection (20) est prévu pour détecter le fait que la tension moyenne du point milieu (PM) devient proche de l'une ou l'autre des tensions présentes sur lesdites bornes d'alimentation (VM, G).

3. Système selon la revendication 1, caractérisé en ce que le circuit de détection (20) est prévu pour comparer, dans un intervalle de temps prédéterminé entre deux commutations de pas, le signe de la composante alternative (PM-VO) de la tension du point milieu (PM) à un signe déterminé par la parité de la commutation de pas.

4. Système selon la revendication 1, caractérisé en ce que le circuit de détection (20) est connecté au circuit de commande (16) pour commuter un pas à chaque passage de la tension du point milieu flottant (PM) par une valeur prédéterminée.

5. Système selon l'une quelconque des revendications 1 à 4, caractérisé en ce que le circuit de détection (20) comprend un comparateur à fenêtre.

6. Système selon la revendication 1, caractérisé en ce que les premières bobines et les deuxièmes bobines sont respectivement couplées magnétiquement.

7. Système selon la revendication 6, caractérisé en ce que chaque interrupteur est muni d'une diode de récupération (DA, DB, DA* DB*) et en ce que le circuit de commande (16) comprend des moyens pour détecter l'inversion de la tension aux bornes d'un interrupteur et pour ouvrir au moins l'interrupteur adjacent.

8. Système selon la revendication 7, caractérisé en ce que le point de connexion entre un interrupteur et une bobine est relié à la borne de commande de l'interrupteur adjacent par l'intermédiaire d'une diode montée dans le sens bloquant en fonctionnement normal.

## Patentansprüche

1. System zur Steuerung eines Unipolar-Synchronmotors mit einem magnetisierten (Dauermagnet-) Läufer und einem mit zwei Wicklungspaaren (A,B; A*,B*) versehenen Stator, das System umfassend:
- einen frei flottierenden gemeinsamen Punkt (PM), mit welchem erste Anschlüsse der Wicklungen verbunden sind, wobei der zweite Anschluß jeder ersten Wicklung (A,A*) eines Paars jeweils über einen entsprechenden ersten Schalter (KA,KA*) mit einem ersten Speise- bzw. Versorgungsanschluß (VM) verbunden ist, und der zweite Anschluß jeder zweiten Wicklung (B,B*) eines Paars jeweils über einen entsprechenden zweiten Schalter (KB,KB*) mit einem zweiten Speise- bzw. Versorgungsanschluß 1 (G) verbunden ist;
- eine Steuerschaltung (16) zur Steuerung der Schalter derart, daß sie eine Sequenz von Kombinationen gleichzeitiger Schließzustände eines ersten betreffenden Schalters und eines zweiten betreffenden Schalters bewirken, wobei der Übergang von einer Schließkombination zu einer anderen eine Rotordrehung um einen vorgegebenen Winkel nach sich zieht;
**dadurch gekennzeichnet,** daß das System wenigstens eine Nachweis- bzw. Detektionsschaltung (20) aufweist, welche an dem flottierenden gemeinsamen Punkt auftretende Spannungsänderungen zum Nachweis wenigstens eines Betriebs- bzw. Funktionszustands des Motors ausnutzt.

2. System nach Anspruch 1, dadurch gekennzeichnet, daß die Nachweis- bzw. Detektionsschaltung (20) zum Nachweis dafür vorgesehen ist, daß die mittlere Spannung an dem Mittenpunkt (PM) sich der einen oder der anderen an den genannten Speise- bzw. Versorgungsanschlüssen anliegenden Spannung annähert.

3. System nach Anspruch 1, dadurch gekennzeichnet, daß die Nachweis- bzw. Detektionsschaltung (20) dazu vorgesehen ist, in einem vorgegebenen Zeitintervall zwischen zwei Schritt-Kommutationen das Vorzeichen der Wechselkomponente (PM-VO) der Mittenpunkt-Spannung (PM) mit einem durch die Parität der Schritt-Kommutierung vorgegebenen Vorzeichen zu vergleichen.

4. System nach Anspruch 1, dadurch gekennzeichnet, daß die Nachweis- bzw. Detektionsschaltung (20) mit der Steuerschaltung (16) verbunden ist, um für jeden Durchgang der Spannung im flottierenden Mittenpunkt (PM) durch einen vorgegebenen Wert eine Schritt-Kommutierung vorzunehmen.

5. System nach einem der Ansprüche 1 bis 4, dadurch gekennzeichnet, daß die Nachweis- bzw. Detektionsschaltung einen Fenster-Komparator aufweist.

6. System nach Anspruch 1, dadurch gekennzeichnet, daß die ersten und die zweiten Wicklungen wechselseitig magnetisch gekoppelt sind.

7. System nach Anspruch 6, dadurch gekennzeichnet, daß jeder Schalter jeweils mit einer Erholungsdiode (DA, DB, DA*, DB*) versehen ist und daß die Steuerschaltung (16) Mittel zum Nachweis der Spannungsumkehr an den Anschlüssen eines Schalters und zum Öffnen wenigstens des benachbarten Schalters aufweist.

8. System nach Anspruch 7, dadurch gekennzeichnet, daß die Verbindungsstelle zwischen einem Schalter und einer Wicklung mit dem Steueranschluß des benachbarten Schalters über eine Diode verbunden ist, die im normalen Betrieb in Sperrichtung geschaltet ist.

## Claims

1. A system for controlling a one-pole synchronous motor, with a magnetized rotor and a stator provided with two pairs of coils (A, B; A*, B*), comprising:
- a floating common node (PM) to which are connected first terminals of said coils, the second terminal of each first coil (A, A*) of a coil pair being connected to a first supply terminal (VM) through a first respective switch (KA, KA*), and the second terminal of each second coil (B, B*) of a coil pair being connected to a second supply terminal (G) through a second respective switch (KB, KB*);
- a control circuit (16) operable for controlling switches so as to carry out a sequence of combinations of simultaneous switching-on operations of a first respective switch and of a second respective switch, the transition from one switching-on combination to another combination causing the rotation of the rotor according to a predetermined angle;
characterized in that it comprises at least one detection circuit (20) using the voltage variations occurring at the floating common node (PM) so as to detect at least one operation condition of the motor.

2. The system of claim 1, characterized in that said detection circuit (20) detects the fact that the mean voltage at the medium node (PM) approaches either one of the voltages present across said supply terminals (VM, G).

3. The system of claim 1, characterized in that said detection circuit (20) compares, within a predetermined time interval between two step switchings, the polarity of the alternating component (PM-V0) of the voltage at the medium node (PM) with a polarity defined by the parity of the step switching.

4. The system of claim 1, characterized in that said detection circuit (20) is connected to said control circuit (16) for switching one step whenever the voltage at said floating medium node (PM) crosses a predetermined value.

5. The system of any of claims 1 to 4, characterized in that said detection circuit (20) includes a window comparator.

6. The system of claim 1, characterized in that the first and second coils are mutually magnetically coupled.

7. The system of claim 6, characterized in that each switch is provided with a recovery diode (DA, DB, DA*, DB*), and wherein said control circuit (16) includes means for detecting the voltage inversion across a switch and turning off at least the adjacent switch.

8. The system of claim 7, characterized in that the junction between a switch and a coil is connected to the control terminal of the adjacent switch through a diode connected in the blocking direction under normal operation conditions.
